(19) Europäisches Patentamt / European Patent Office / Office européen des brevets

(11) **EP 4 654 449 A1**

(12) **EUROPEAN PATENT APPLICATION**
published in accordance with Art. 153(4) EPC

(43) Date of publication:
**26.11.2025 Bulletin 2025/48**

(21) Application number: **24876201.5**

(22) Date of filing: **05.08.2024**

(51) International Patent Classification (IPC):
**H02M 1/00** (2006.01)     **H02M 1/08** (2006.01)

(52) Cooperative Patent Classification (CPC):
**H02J 1/10; H02J 3/38; H02J 3/46; H02M 1/00; H02M 1/08**

(86) International application number:
**PCT/CN2024/109924**

(87) International publication number:
**WO 2025/077381 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.10.2023 CN 202311305157**

(71) Applicant: **Honor Device Co., Ltd.**
**Shenzhen, Guangdong 518040 (CN)**

(72) Inventor: **AN, Qi**
**Shenzhen, Guangdong 518040 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYPHASE POWER SOURCE, POWER SUPPLY METHOD AND ELECTRONIC DEVICE**

(57)    This application discloses a multiphase power source, a power supply method, and an electronic device, and relates to the field of power source design for improving efficiency of the multiphase power source in a light load state. The multiphase power source includes a multiphase controller, N first power modules (N is a positive integer), and a second power module. The second power module includes two power submodules that are connected in parallel, and a loss of each power submodule is lower than that of each first power module. An input terminal of the multiphase controller is configured to be coupled to an output terminal of the processor, and a first output terminal of the multiphase controller is coupled to control terminals of each power submodule and each first power module. A second output terminal of the multiphase controller is coupled to input terminals of each power submodule and each first power module. Power supply terminals of each power submodule and each first power module are separately configured to be coupled to an output terminal of a voltage source. Output terminals of each power submodule and each first power module are separately coupled to a power supply terminal of the processor.

FIG. 4

## Description

This application claims priority to Chinese Patent Application No. 202311305157.0, filed with the China National Intellectual Property Administration on October 8, 2023 and entitled "MULTIPHASE POWER SOURCE, POWER SUPPLY METHOD, AND ELECTRONIC DEVICE", which is incorporated herein by reference in its entirety.

## TECHNICAL FIELD

Embodiments of this application relate to the field of power source design, and in particular, to a multiphase power source, a power supply method, and an electronic device.

## BACKGROUND

With development of electronic devices, power consumption of the electronic device is increasing. Therefore, how to reduce the power consumption of the electronic devices is an urgent problem to be resolved. Generally, improving efficiency of power sources of electronic devices is a means to reduce power consumption of the electronic devices. From analysis on power consumption of a power source of an electronic device, it can be learned that power consumption of a processor in the electronic device accounts for a relatively high proportion of overall power consumption of the electronic device. Therefore, to reduce the overall power consumption of the electronic device, an emphasis may be placed on improving efficiency of a multiphase power source that supplies power to the processor.

## SUMMARY

This application provides a multiphase power source, a power supply method, and an electronic device for improving efficiency of the multiphase power source in a light load state, thereby reducing overall power consumption of the electronic device.

To achieve the foregoing objective, the following technical solutions are used in this application.

According to a first aspect, this application provides a multiphase power source, including a multiphase controller, N first power modules that are connected in parallel, and a second power module, where N is a positive integer. The second power module includes a first power submodule and a second power submodule that are connected in parallel, and a loss of the first power submodule and a loss of the second power submodule are lower than a loss of each first power module.

An input terminal of the multiphase controller is configured to be coupled to an output terminal of a processor. A first output terminal of the multiphase controller is coupled to a control terminal of the first power submodule, a control terminal of the second power submodule, and a control terminal of each first power module. A second output terminal of the multiphase controller is coupled to an input terminal of the first power submodule, an input terminal of the second power submodule, and an input terminal of each first power module. A power supply terminal of the first power submodule, a power supply terminal of the second power submodule, and a power supply terminal of each first power module are separately configured to be coupled to an output terminal of a voltage source of an electronic device. An output terminal of the first power submodule, an output terminal of the second power submodule, and an output terminal of each first power module are separately coupled to a power supply terminal of the processor. The multiphase controller is configured to control the first power submodule to supply power to the processor when the processor indicates that the multiphase power source is in a light load state.

When the multiphase power source provided in this application is in the light load state, the multiphase controller may control one of the two power submodules to supply power to the processor. As such, a loss of each power submodule is lower than that of each power module in an original multiphase power source. Therefore, in the light load state, one of the two power submodules has a relatively low electric energy loss when supplying power to the processor, thereby improving power supply efficiency of the power submodule, and further improving efficiency of the multiphase power source in the light load state.

In one possible implementation of the first aspect, each first power module includes a driver chip, a first field effect transistor, a second field effect transistor, and a first inductor. An input terminal of the driver chip is coupled to an output terminal of the multiphase controller. An output terminal of the driver chip is coupled to a control terminal of the first field effect transistor and a control terminal of the second field effect transistor. A first terminal of the first field effect transistor is configured to be coupled to the voltage source of the electronic device. A second terminal of the first field effect transistor is coupled to a first terminal of the second field effect transistor and a first terminal of the first inductor. A second terminal of the first inductor is coupled to the power supply terminal of the processor.

In another possible implementation of the first aspect, each of the first power submodule and the second power submodule includes a driver chip, a third field effect transistor, a fourth field effect transistor, and a second inductor. An input terminal of the driver chip is coupled to the output terminal of the multiphase controller, and an output terminal of the driver chip is coupled to a control terminal of the third field effect transistor and a control terminal of the fourth field effect transistor. A first terminal of the third field effect transistor is configured to be coupled to the voltage source of the electronic device. A second terminal of the third field effect transistor is coupled to a first terminal of the fourth field effect transistor and a first terminal of the second inductor. A second terminal of the second inductor is coupled to the power supply terminal of the processor. A loss of the third field effect transistor is lower than that of the first field effect transistor, a loss of the fourth field effect transistor is lower than that of the second field effect transistor, and a loss of the second inductor is lower than that of the first inductor.

Because the loss of the third field effect transistor is lower than that of the first field effect transistor, the loss of the fourth field effect transistor is lower than that of the second field effect transistor, and the loss of the second inductor is lower than that of the first inductor, the loss of each power submodule is lower than that of each first power module. Based on this, in the light load state, the electric energy loss may be reduced by controlling one of the power submodules to supply power to the processor, thereby improving efficiency of the multiphase power source in the light load state.

In another possible implementation of the first aspect, the third field effect transistor and the fourth field effect transistor satisfy at least one of the following conditions: low junction capacitance, low on-resistance, and low switching frequency.

It can be learned from a loss formula for field effect transistors that a loss of a field effect transistor is related to junction capacitance, on-resistance, and switching frequency. Therefore, selecting a field effect transistor that satisfies at least one of the foregoing conditions can ensure that the loss of the field effect transistor is relatively low.

In another possible implementation of the first aspect, an inductance value of the second inductor is greater than that of the first inductor. For an inductor, a larger inductance value indicates a lower ripple current of the inductor. A ripple current of the inductor is proportional to a magnetic loss of the inductor. Therefore, a lower ripple current of the inductor leads to a lower magnetic loss of the inductor. It can be learned that a larger inductance value of the inductor indicates a lower loss of the inductor.

In another possible implementation of the first aspect, the first inductor and the second inductor may be inductors in a same package. Generally, a larger inductance value of an inductor indicates a larger size of the inductor. A larger size of the inductor leads to higher costs, and a larger area of a power module, which in turn leads to a larger area of the multiphase power source. To reduce costs and control an area of the multiphase power source, an inductor with a relatively large inductance value may be selected as the second inductor in the same package.

In another possible implementation of the first aspect, each first power module further includes a first sampling module. A first terminal of the first sampling module is coupled to the first terminal of the first inductor. A second terminal of the first sampling module is coupled to the second terminal of the first inductor. An output terminal of the first sampling module is coupled to a first feedback terminal of the multiphase controller.

The first sampling module may collect a first sampled signal from the first inductor in the first power module, and feed back the first sampled signal to the multiphase controller. The multiphase controller may perform current sharing control on an output current of each power module based on the first sampled signal from the power module, so that output currents of all phases of the multiphase power source are equal when the multiphase power source works in a full-phase continuous conduction mode.

In another possible implementation of the first aspect, the first sampling module includes a first resistor, a second resistor, and a first capacitor. A first terminal of the first resistor is coupled to the first terminal of the first inductor, a second terminal of the first resistor is coupled to a first terminal of the first capacitor, and a second terminal of the first capacitor is coupled to the second terminal of the first inductor. The first terminal of the first capacitor is further coupled to a first terminal of a first operational transconductance amplifier of the multiphase controller. The second terminal of the first capacitor is further coupled to a second terminal of the first operational transconductance amplifier by using the second resistor.

In another possible implementation of the first aspect, the second power module further includes a second sampling module. A first terminal of the second sampling module is coupled to the first terminal of the second inductor in the first power submodule, a second terminal of the second sampling module is coupled to the second terminal of the second inductor in the first power submodule, and an output terminal of the second sampling module is coupled to a second feedback terminal of the multiphase controller.

The second sampling module may collect a first sampled signal from the second inductor in the first power submodule, and feed back the first sampled signal to the multiphase controller. The multiphase controller may obtain a first sampled signal from the second power module based on the first sampled signal from each power submodule. Then, with reference to the first sampled signal from each first power module, the multiphase controller performs current sharing control on an output current of each power module, so that output currents of all phases of the multiphase power source are equal when the multiphase power source works in a full-phase continuous conduction mode.

In another possible implementation of the first aspect, the second sampling module includes a third resistor, a fourth resistor, and a second capacitor. A first terminal of the third resistor is coupled to the first terminal of the second inductor in the first power submodule, a second terminal of the third resistor is coupled to a first terminal of the second capacitor, and a second terminal of the second capacitor is coupled to the second terminal of the second inductor in the first power submodule. The first terminal of the second capacitor is further coupled to a first terminal of a second operational transconductance amplifier of the multiphase controller, and the second terminal of the second capacitor is further coupled to a second terminal of the second operational transconductance amplifier by using the fourth resistor.

In another possible implementation of the first aspect, the second power module further includes a third sampling module. A first terminal of the third sampling module is coupled to the first terminal of the second inductor in the second power submodule, a second terminal of the third sampling module is coupled to the second terminal of the second inductor in the second power submodule, and an output terminal of the third sampling module is coupled to a third feedback terminal of the multiphase controller.

The third sampling module may collect a first sampled signal from the second inductor in the second power submodule, and feed back the first sampled signal to the multiphase controller. The multiphase controller may obtain a first sampled signal from the second power module based on the first sampled signal from each power submodule. Then, with reference to the first sampled signal from each first power module, the multiphase controller performs current sharing control on an output current of each power module, so that output currents of all phases of the multiphase power source are equal when the multiphase power source works in a full-phase continuous conduction mode.

In another possible implementation of the first aspect, the third sampling module includes a fifth resistor, a sixth resistor, and a third capacitor. A first terminal of the fifth resistor is coupled to the first terminal of the second inductor in the second power submodule, a second terminal of the fifth resistor is coupled to a first terminal of the third capacitor, and a second terminal of the third capacitor is coupled to the second terminal of the second inductor in the second power submodule. The first terminal of the third capacitor is further coupled to a first terminal of a third operational transconductance amplifier of the multiphase controller, and the second terminal of the third capacitor is further coupled to a second terminal of the third operational transconductance amplifier by using the sixth resistor.

According to a second aspect, this application provides a power supply method, applied to the multiphase power source according to the first aspect and any one of the possible implementations of the first aspect. The power supply method includes:

controlling the first power submodule to supply power to the processor when the processor indicates that the multiphase power source is in a light load state.

In a possible implementation of the second aspect, the power supply method further includes: controlling each power submodule and each first power module to supply power to the processor when the processor indicates that the multiphase power source is in a full-phase continuous conduction mode.

In another possible implementation of the second aspect, the power supply method further includes: controlling one of the first power modules to supply power to the processor when the processor indicates that the multiphase power source is in a single-phase continuous conduction mode.

In another possible implementation of the second aspect, the power supply method further includes: controlling each power submodule to supply power to the processor when the processor indicates that the multiphase power source is in a single-phase continuous conduction mode.

According to a third aspect, this application provides an electronic device, including a voltage source, a processor, a microcontroller, and the multiphase power source according to the first aspect and any one of the possible implementations of the first aspect. An output terminal of the voltage source is coupled to a power supply terminal of the multiphase power source and a power supply terminal of the microcontroller. A control terminal of the multiphase power source is coupled to an output terminal of the processor and an output terminal of the microcontroller. An output terminal of the multiphase power source is coupled to a power supply terminal of the processor.

According to a fourth aspect, this application provides a computer-readable storage medium, including instructions, where when the instructions are run on an electronic device, the electronic device is enabled to perform the power supply method according to the second aspect and any one of the possible implementations of the second aspect.

For technical effects of the second aspect to the fourth aspect, refer to technical effects of the first aspect and any one of the implementations of the first aspect. Details are not described herein again.

**BRIEF DESCRIPTION OF DRAWINGS**

FIG. 1 is a schematic diagram of a structure of an electronic device in the conventional technology;
FIG. 2 is a schematic diagram of a structure of a multiphase power source in the conventional technology;
FIG. 3 is a schematic diagram of current distribution of a multiphase power source;
FIG. 4 is a first schematic diagram of a structure of a multiphase power source according to an embodiment of this application;
FIG. 5 is a first schematic flowchart of a power supply method according to an embodiment of this application;
FIG. 6 is a second schematic diagram of a structure of a multiphase power source according to an embodiment of this application;

FIG. 7 is a second schematic flowchart of a power supply method according to an embodiment of this application;

FIG. 8 is a third schematic flowchart of a power supply method according to an embodiment of this application;

FIG. 9 is a schematic diagram of efficiency gains of a multiphase power source working in a light load state according to an embodiment of this application;

FIG. 10 is a third schematic diagram of a structure of a multiphase power source according to an embodiment of this application; and

FIG. 11 is a fourth schematic diagram of a structure of a multiphase power source according to an embodiment of this application.

## DESCRIPTION OF EMBODIMENTS

In embodiments of this application, terms such as "first" and "second" are merely used to distinguish features of the same type, and cannot be understood as an indication of relative importance, a quantity, or a sequence.

In the embodiments of this application, words such as "example" or "for example" are used to represent giving an example, an illustration, or a description. Any embodiment or design solution described as "example" or "for example" in this application should not be construed as being preferred or advantageous over other embodiments or design solutions. Exactly, the words such as "example" or "for example" are intended to present related concepts in a specific manner.

In the embodiments of this application, the term "couple" or "connection" should be understood in a broad sense. For example, the connection may be a physically direct connection, or an indirect connection implemented by an electronic component, such as a connection implemented by a resistor, an inductor, a capacitor, or another electronic component.

First, some concepts in the embodiments of this application are described.

A multiphase power source is a power source capable of simultaneously providing a plurality of voltages having the same frequency and different initial phases. For example, the multiphase power source may be a three-phase power source, a four-phase power source, a six-phase power source, or the like.

A multiphase controller is usually a digital chip, and is an important part of a multiphase power source. The multiphase controller usually uses a pulse width modulation (pulse width modulation, PWM) technology to synchronously control a plurality of single-phase power sources in the multiphase power source, so that the plurality of single-phase power sources are consistent in phases and voltages, thereby forming a multiphase power source.

An operational transconductance amplifier (operational transconductance amplifier, OTA) is an amplifier that converts an input voltage into an output current. That is, the operational transconductance amplifier is a voltage-controlled current source.

With development of electronic devices, power consumption of the electronic device is increasing. Therefore, how to reduce the power consumption of the electronic devices is an urgent problem to be resolved. Generally, improving efficiency of power sources of electronic devices is a means to reduce power consumption of the electronic devices. From analysis on power consumption of a power source of an electronic device, it can be learned that power consumption of a processor in the electronic device accounts for a relatively high proportion of overall power consumption of the electronic device, for example, the proportion is approximately 25%. Therefore, to reduce the overall power consumption of the electronic device, an emphasis may be placed on improving efficiency of a multiphase power source that supplies power to the processor.

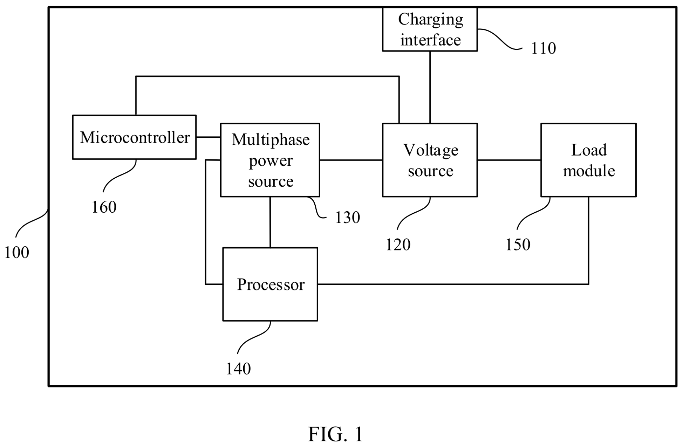

FIG. 1 is a schematic diagram of a structure of an electronic device in the conventional technology. As shown in FIG. 1, the electronic device 100 may include a charging interface 110, a voltage source 120, a multiphase power source 130, a processor 140, a load module 150, and a microcontroller 160.

The charging interface 110 is coupled to an external power source (not shown in FIG. 1) by using a charging cable. An output terminal of the charging interface 110 is coupled to a power supply terminal of the voltage source 120. An output terminal of the voltage source 120 is coupled to a power supply terminal of the multiphase power source 130, a power supply terminal of the load module 150, and a power supply terminal of the microcontroller 160 for supplying power to the multiphase power source 130, the load module 150, and the microcontroller 160. An output terminal of the multiphase power source 130 is coupled to a power supply terminal of the processor 140 for supplying power to the processor 140.

An output terminal of the processor 140 is coupled to a control terminal of the multiphase power source 130 and a control terminal of the load module 150 for controlling the multiphase power source 130 and the load module 150. An output terminal of the microcontroller 160 is coupled to the control terminal of the multiphase power source 130 for controlling the multiphase power source 130 to supply power to the processor 140 before the processor 140 is started, so as to start the processor 140, so that the processor 140 can send control information to the multiphase power source 130.

The voltage source 120 may be a battery, but is not limited thereto. The processor 140 may be a central processing unit (central processing unit, CPU), or a graphics processing unit (graphics processing unit, GPU), but is not limited thereto. The microcontroller 160 may be a low-frequency, low-specification central processing unit, but is not limited thereto. The load module 150 may include a display, a key, an audio module, a sensor module, and a communication module, but is not limited thereto.

Optionally, the voltage source 120 may be coupled to the microcontroller 160 by using a first power conversion module (not shown in FIG. 1). Similarly, the voltage source 120 may be coupled to the load module 150 by using a second power conversion module (not shown in FIG. 1). The first power conversion module and the second power conversion module may be the same power conversion module, or may be different power conversion modules. This is not limited in the embodiments of this application.

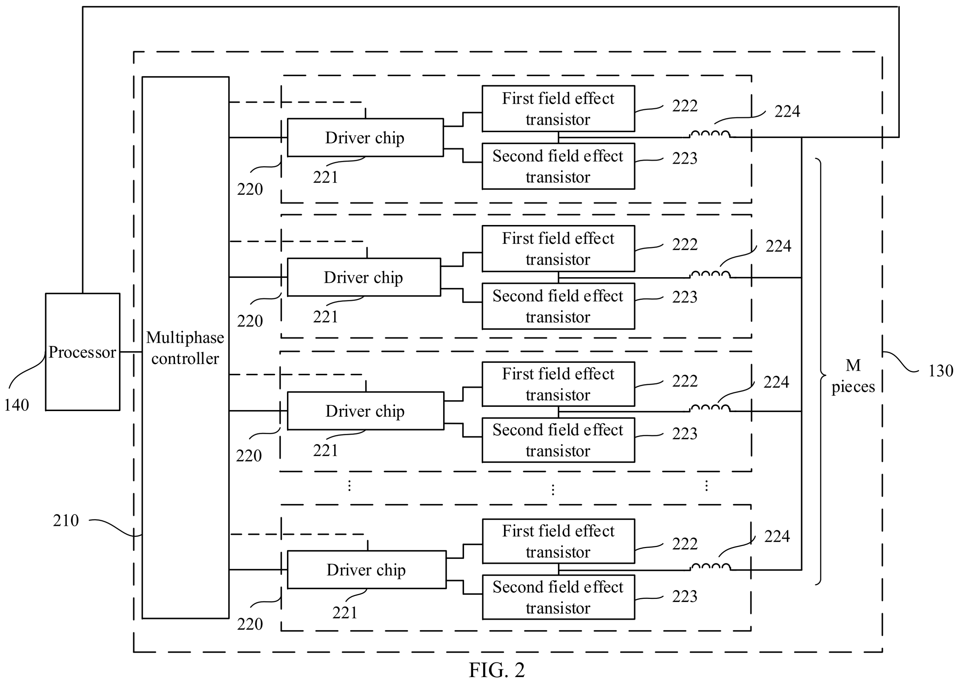

FIG. 2 is a schematic diagram of a structure of a multiphase power source in the conventional technology. As shown in FIG. 2, the multiphase power source 130 may include one multiphase controller 210 and M power modules 220. A power supply signal output by each power module 220 is a phase in a power supply signal output by the multiphase power source 130. M is a positive integer greater than 1, and a value of M depends on a quantity of "phases" of the multiphase power source. For example, when the multiphase power source is a three-phase power source, M=3.

An input terminal of the multiphase controller 210 is coupled to the output terminal of the processor 140. A first output terminal of the multiphase controller 210 is coupled to a control terminal of the power module 220, and a second output terminal of the multiphase controller 210 is coupled to an input terminal of the power module 220. A power supply terminal of the power module 220 is coupled to an output terminal (not shown in FIG. 2) of a voltage source. That is, the voltage source supplies power to the power module 220. An output terminal of the power module 220 is coupled to the power supply terminal of the processor 140. In conclusion, the multiphase controller 210 may control, based on control information output by the output terminal of the processor 140, at least one power module 220 to output a corresponding power supply signal to the power supply terminal of the processor 140.

It should be noted that the first output terminal and the second output terminal of the multiphase controller 210 are different output terminals, but this does not mean that the multiphase controller 210 includes only two output terminals.

Each power module 220 may include a driver chip 221, a first field effect transistor 222, a second field effect transistor 223, and a first inductor 224.

A control terminal of the driver chip 221 is coupled to a first output terminal of the multiphase controller, an input terminal of the driver chip 221 is coupled to a second output terminal of the multiphase controller 210, and an output terminal of the driver chip 221 is coupled to a control terminal of the first field effect transistor 222 and a control terminal of the second field effect transistor 223. A first terminal of the first field effect transistor 222 is coupled to the output terminal (not shown in FIG. 2) of the voltage source. That is, the first terminal of the first field effect transistor 222 is the power supply terminal of the power module 220. A second terminal of the first field effect transistor 222 is coupled to a first terminal of the second field effect transistor 223, and a second terminal of the second field effect transistor 223 is coupled to a ground terminal (not shown in FIG. 2) of the electronic device. The second terminal of the first field effect transistor 222 is further coupled to a first terminal of the first inductor 224, and a second terminal of the first inductor 224 is coupled to the power supply terminal of the processor 140. That is, the second terminal of the first inductor 224 is the output terminal of the power module 220.

Specifically, states of a multiphase power source may include a working state and an off state (that is, a disabled (disable) mode). The following uses a multiphase power source that supplies power to a processor (for example, a CPU) as an example to briefly describe a possible working state of the multiphase power source.

Full-phase continuous conduction mode: A full-phase continuous conduction mode (continuous conduction mode, CCM) is a mode in which each power module (that is, each phase) of the multiphase power source has an output. In this mode, a current of an inductor in each power module never reaches 0A in one switching cycle of a field effect transistor, or in other words, the inductor in the power module is never "reset". This means that a magnetic flux of the inductor in the power module never reaches 0 in one switching cycle of the field effect transistor. Generally, in the full-phase continuous conduction mode, an output current of the multiphase power source is greater than 10A.

When the multiphase controller 210 receives first control information for indicating that the multiphase power source 130 needs to be in the full-phase continuous conduction mode, the driver chip 221 in each power module 220 may be enabled to separately control the first field effect transistor 222 and the second field effect transistor 223 to be alternately turned on, so as to charge and discharge the first inductor 224, and therefore supply power to the processor 140.

Single-phase continuous conduction mode: A single-phase continuous conduction mode (continuous conduction mode, CCM) is a mode in which one power module (that is, one phase) of the multiphase power source outputs a power supply signal. In this mode, a current of an inductor in one power module in a working state never reaches 0A in one switching cycle of a field effect transistor, or the inductor in the power module is never "reset". This means that a magnetic flux of the inductor in the power module never reaches 0 in one switching cycle of the field effect transistor. Generally, in the single-phase continuous conduction mode, an output current of the multiphase power source is approximately 5A-10A.

When the multiphase controller 210 receives first control information for indicating that the multiphase power source 130 needs to be in the single-phase continuous conduction mode, the driver chip 221 in one power module 220 may be enabled to control the first field effect transistor 222 and the second field effect transistor 223 to be alternately turned on, so as to charge and discharge the first inductor 224, and therefore supply power to the processor 140.

Single-phase discontinuous conduction mode: A single-phase discontinuous conduction mode (discontinuous conduction mode, DCM) is also a mode in which one power module of the multiphase power source outputs a power supply signal. In this mode, a current of an inductor in one power module in a working state eventually reaches 0 in one switching cycle of a field effect transistor, or the inductor in the power module is properly "reset". This means that a magnetic flux of the inductor in the power module reaches 0 in one switching cycle of the field effect transistor. Generally, in the single-phase discontinuous conduction mode, an output current of the multiphase power source may be less than 5A.

In some embodiments, the single-phase discontinuous conduction mode may also be referred to as a light load state. For ease of description, the single-phase discontinuous conduction mode is referred to as a light load state in the following description. Generally, when the electronic device works in a light office scenario (for example, editing a document, browsing a web, and holding a video conference), the multiphase power source may work in the light load state.

When the multiphase controller 210 receives first control information for indicating that the multiphase power source 130 needs to be in the single-phase discontinuous conduction mode (that is, the light load state), the driver chip 221 in the power module 220 of one phase is controlled to control the corresponding first field effect transistor 222 and the corresponding second field effect transistor 223 to be alternately turned on, so as to control the corresponding first inductor 224 to be charged and discharged, and therefore supply power to the processor 140.

In conclusion, the multiphase power source supplies power to the processor as follows: The multiphase controller controls, based on the first control information sent by the processor, at least one driver chip to control the corresponding first field effect transistor and the corresponding second field effect transistor to be alternately turned on, so that at least one first inductor is charged and discharged to supply power to the processor.

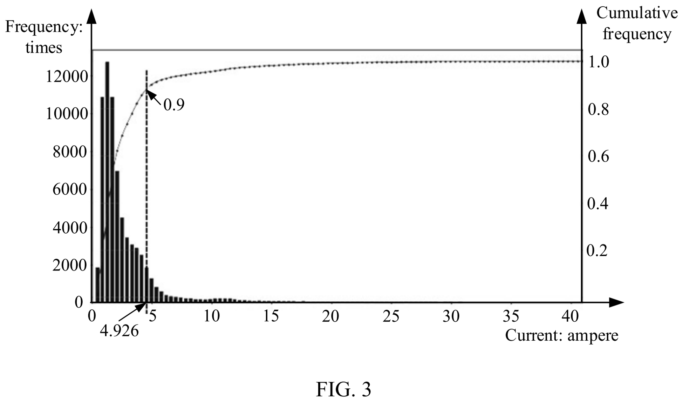

FIG. 3 is a schematic diagram of current distribution of a multiphase power source. As shown in FIG. 3, a cumulative frequency at which a current of the multiphase power source is less than 4.926A is 90%. That is, the current of the multiphase power source is less than 4.926A most of time.

With reference to the working state of the multiphase power source and the current distribution of the multiphase power source, it can be learned that the multiphase power source works in the light load state most of time. Therefore, to improve efficiency of the multiphase power source, an emphasis may be placed on improving efficiency of the multiphase power source in the light load state.

Still as shown in FIG. 2, in actual application, to adapt to a maximum input current of the processor 140, a maximum output current of each power module 220 in the multiphase power source 130 needs to satisfy an average current of a maximum input current. That is, the first field effect transistor 222, the second field effect transistor 223, and the first inductor 224 in each power module 220 need to be able to withstand an average current of a maximum input current.

For example, that the multiphase power source is a four-phase power source, and a maximum input current of the processor is 170A is used as an example, an average current of the maximum input current is 42.5A. That is, the first field effect transistor 222, the second field effect transistor 223, and the first inductor 224 in each power module 220 need to be able to withstand a current of 42.5A.

Generally, a field effect transistor and an inductor generate some losses during operation. These losses are a main reason for low efficiency of the multiphase power source, especially for low efficiency of the multiphase power source in the light load state. The following briefly describes losses of a field effect transistor and losses of an inductor.

For a field effect transistor, losses of the field effect transistor may include an on-state loss, a switching loss, and a drive loss, but are not limited thereto.

Specifically, the on-state loss is a loss generated when a current passes through the interior of the field effect transistor. The on-state loss may be expressed by using the following formula (1):

$$P_{loss1} = I_{drain}^2 \times R_{dson} \tag{1}$$

where $P_{loss1}$ is the on-state loss; $I_{drain}$ is a drain-source current of the field effect transistor when the field effect transistor is turned on; and $R_{dson}$ is on-resistance of the field effect transistor.

The switching loss is a loss generated during a switching operation of the field effect transistor. The switching loss may be expressed by using the following formula (2):

$$P_{loss2} = C_{gd} \times V_{gs}^2 \times f_{sw} \tag{2}$$

where $P_{loss2}$ is the switching loss; $C_{gd}$ is junction capacitance between a gate and a source of the field effect transistor; $V_{gs}$ is a gate-source voltage of the field effect transistor; and $f_{sw}$ is switching frequency of the field effect transistor.

In addition, a higher current-carrying capability (that is, $I_{drain}$) of the field effect transistor leads to higher junction capacitance between the gate and the source of the field effect transistor. Based on this, with reference to formula (1) and formula (2), it can be learned that a field effect transistor having relatively high junction capacitance needs to be selected to withstand a relatively high current. However, a power loss of such a field effect transistor is relatively high, and in addition, a current loss of the field effect transistor is also relatively high. That is, a field effect transistor that can withstand a high current has a relatively high loss, which leads to relatively low efficiency of each power module, and consequently leads to relatively low efficiency of a multiphase power source.

For an inductor, losses of the inductor may include a direct current loss and an alternating current loss of the inductor, but are not limited thereto. The alternating current loss of the inductor may also be referred to as a magnetic loss of the inductor.

Specifically, the magnetic loss of the inductor is a loss generated when work done on the inductor from the outside is converted into heat during charging and discharging of the inductor. The magnetic loss of the inductor may be expressed by using the following formula (3):

$$AC_{\text{loss}} = \Delta I^2 \times R_{AC} \qquad (3)$$

where $AC_{\text{loss}}$ is the magnetic loss of the inductor; $\Delta I$ is a ripple current of the inductor; and $R_{AC}$ is alternating current resistance of the inductor.

It can be learned from formula (3) that when the alternating current resistance of the inductor is constant, a higher ripple current of the inductor leads to a higher magnetic loss of the inductor.

In addition, the inductance value of the inductor and the ripple current of the inductor may be expressed by using the following formula (4):

$$\Delta I = \frac{U \times D}{r \times L \times f_{sw}} \qquad (4)$$

where $U$ is a voltage at two ends of the inductor; $D$ is a duty cycle; $L$ is the inductance value of the inductor; $r$ is a current ripple ratio of the inductor; and $f_{sw}$ is the switching frequency of the field effect transistor.

It can be learned from formula (4) that the inductance value of the inductor is inversely proportional to the ripple current of the inductor. A larger inductance value of the inductor indicates a lower ripple current of the inductor. Therefore, an inductor with a large inductance value may be selected to reduce a ripple current of the inductor, so as to reduce a magnetic loss of the inductor.

However, due to limitations on a package of the inductor and a current-carrying capability of the inductor, the inductance value of the inductor cannot keep increasing. Specifically, a larger inductance value of the inductor indicates a lower current-carrying capability of the inductor. That is, an inductor with a large inductance value cannot be selected when a current is relatively high. In addition, a larger inductance value of the inductor indicates a larger package of the inductor, and a larger size of the inductor, which not only increases costs of a multiphase power source, but also increases a circuit area of the multiphase power source. That is, an inductor with a larger inductance value cannot be selected while ensuring that each inductor can withstand an average current of a maximum input current, and maintain low costs and a small circuit area of a multiphase power source. For the foregoing reasons, only an inductor with a relatively small inductance value can be selected among multiphase power sources in the conventional technology. Therefore, a magnetic loss of the inductor cannot be reduced, which leads to relatively low efficiency of each power module, and consequently leads to relatively low efficiency of a multiphase power source.

For example, in the conventional technology, an inductor is in a 0630 package, and has an inductance value of 0.15 uH. With parameters such as a current-carrying capability of the inductor and direct current resistance of the inductor unchanged, an inductor in a 1030 package needs to be selected if an inductor with a larger inductance value is selected. However, the inductor in the 1030 package has a larger size compared with the inductor in the 0630 package.

In conclusion, for each power module in a multiphase power source in the conventional technology, a loss of a field effect transistor and a loss of an inductor are relatively high even in a light load state, when taking into account costs, a size, and an average current of a maximum input current of a processor. Therefore, in the light load state, a loss of the power module in the multiphase power source in the conventional technology is relatively high. It can be learned that efficiency of the multiphase power source in the conventional technology is relatively low in the light load state.

Therefore, an embodiment of this application provides an electronic device for which a multiphase power source is improved. In an improved multiphase power source, one power module in the original multiphase power source is replaced by two power submodules that are connected in parallel. The replaced power module may be any power module in the original multiphase power source. An internal structure of the two power submodules is the same as that of any original power module. A sum of output currents of the two power submodules is equal to an output current of one power module in the original multiphase power source. Therefore, the output current of each power submodule may be respectively less than that of one power module in the original multiphase power source. That is, a maximum current that can be withstood by the power submodule may be separately less than an average current of a maximum input current.

In this way, a current to be withstood by a field effect transistor in each power submodule is less than that to be withstood by a field effect transistor of one power module in the original multiphase power source. Therefore, a loss of the field effect transistor in the power submodule may be lower than that of the field effect transistor of the power module in the original multiphase power source. Similarly, a current to be withstood by an inductor in each power submodule is less than that of an inductor of one power module in the original multiphase power source. Therefore, a loss of the inductor in the power submodule may be lower than that of the inductor of the power module in the original multiphase power source. Therefore, a loss of each power submodule is lower than that of each power module in the original multiphase power source.

When the multiphase power source is in the light load state, the multiphase controller may control one of the two power submodules to supply power to the processor, and control the other power submodule not to supply power to the processor. As such, a loss of each power submodule is lower than that of each power module in an original multiphase power source. Therefore, in the light load state, one of the two power submodules has a relatively low electric energy loss when supplying power to the processor, thereby improving power supply efficiency of the power submodule, and further improving efficiency of the multiphase power source in the light load state.

The electronic device in this embodiment of this application may be mobile, or may be stationary. The electronic device may be deployed on land (for example, indoors or outdoors, handheld or vehicle-mounted); or may be deployed on the water (for example, a ship model); or may further be deployed in the air (for example, a drone). The electronic device may be referred to as user equipment (user equipment, UE), an access terminal, a terminal unit, a subscriber unit (subscriber unit), a terminal station, a mobile station (mobile station, MS), a mobile console, a terminal agent, or a terminal apparatus. For example, the electronic device may be a mobile phone, a virtual reality (virtual reality, VR) device, an augmented reality (augmented reality, AR) device, a terminal in industrial control (industrial control), a terminal in self driving (self driving), a terminal in remote medical (remote medical), a terminal in a smart grid (smart grid), a terminal in transportation safety (transportation safety), a terminal in a smart city (smart city), a terminal in smart home (smart home), or the like. A specific type and a structure of the electronic device are not limited in this embodiment of this application.

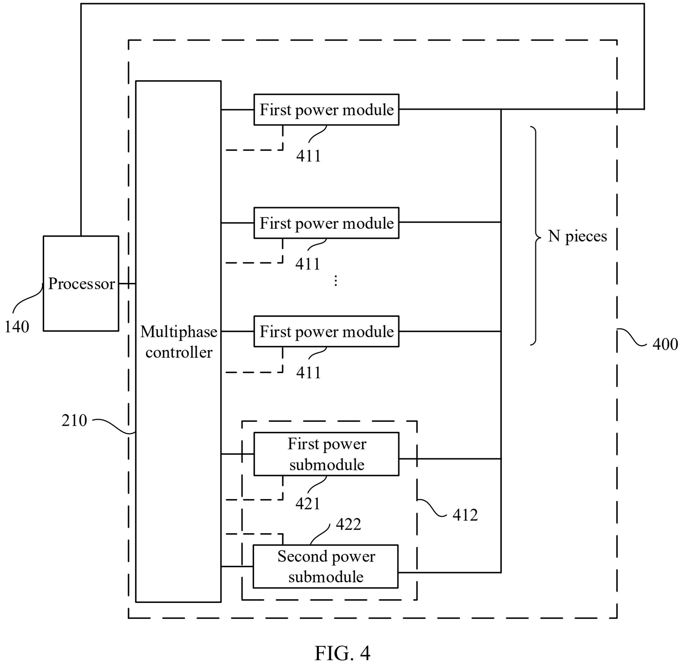

FIG. 4 is a first schematic diagram of a structure of a multiphase power source according to an embodiment of this application. As shown in FIG. 4, an improved multiphase power source 400 provided in this embodiment of this application may include a multiphase controller 210, N first power modules 411, and a second power module 412, where N is a positive integer. An input terminal of the multiphase controller 210 is coupled to the output terminal of the processor 140. A first output terminal of the multiphase controller 210 is coupled to a control terminal of each first power module 411 and a control terminal of the second power module 412. A second output terminal of the multiphase controller 210 is coupled to an input terminal of each first power module 411 and an input terminal of the second power module 412. A power supply terminal of each first power module 411 is coupled to the output terminal (not shown in FIG. 4) of the voltage source, and a power supply terminal of the second power module 412 is also coupled to the output terminal (not shown in FIG. 4) of the voltage source. An output terminal of each first power module 411 is coupled to the power supply terminal of the processor 140, and an output terminal of the second power module 412 is also coupled to the power supply terminal of the processor 140.

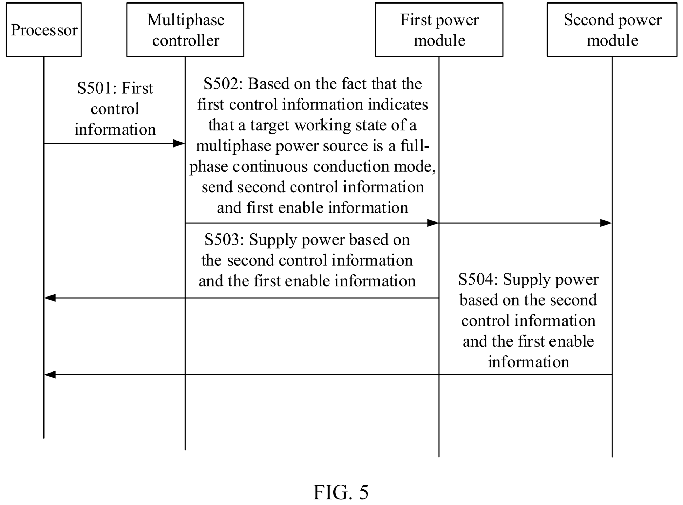

The multiphase controller 210 may be configured to perform a power supply method according to an embodiment of this application. As shown in FIG. 5, the power supply method may include the following steps.

S501: The multiphase controller receives first control information sent by the processor.

The first control information may include a target working state and voltage information of a multiphase power source. The target working state is a working state in which the processor needs a multiphase power source. In this working state, a current provided by the multiphase power source to the processor can satisfy a current working scenario of the electronic device. The target working state may be one of a full-phase continuous conduction mode, a single-phase continuous conduction mode, and a light load state. The voltage information is an output voltage (that is, an input voltage required by the processor) of the multiphase power source.

When the electronic device works in a light office scenario, the first control information is used to indicate that the target working state of the multiphase power source is the light load state. When the electronic device works in a heavy load scenario, the first control information is used to indicate that the target working state of the multiphase power source is the full-phase continuous conduction mode. When the electronic device works in another scenario, the first control information is used to indicate that the target working state of the multiphase power source is the single-phase continuous conduction mode.

S502: Based on the fact that the first control information indicates that the target working state of the multiphase power source is the full-phase continuous conduction mode, the multiphase controller sends second control information and first enable information to each first power module and the second power module.

Enable information in this embodiment of this application is used to control each power module to start or stop working. The enable information may be a high-level signal or a low-level signal. For example, the enable information is at a high level, and is used to control each power module to start; or the enable information is at a low level, and is used to control each power module to stop working. Alternatively, the enable information is at a low level, and is used to control each power module to start; or the enable information is at a high level, and is used to control each power module to stop working.

In this embodiment, the first enable information is used to indicate that all power modules (for example, each first power module and the second power module) are started. It should be noted that in the full-phase continuous conduction mode, each phase of the multiphase power source needs to output a current to supply power to the processor. Therefore, the multiphase controller may send the same first enable information to each first power module and the second power module.

The second control information is used to control each power module to supply power to the processor. The second control information may be a square wave signal with an adjustable duty cycle. For example, the second control information may be a pulse width modulation (pulse width modulation, PWM) signal. A magnitude of an output current of a corresponding power module may be adjusted by adjusting a duty cycle of the second control information.

It should be noted that in the full-phase continuous conduction mode, each phase of the multiphase power source needs to output a current to supply power to the processor, and the output current of each phase of the multiphase power source is required to be substantially equal. Therefore, the multiphase controller may send the same second control information to each first power module and the second power module to ensure that the first power module and the second power module may output substantially equal currents to the processor.

S503: The first power module supplies power to the processor based on the second control information and the first enable information.

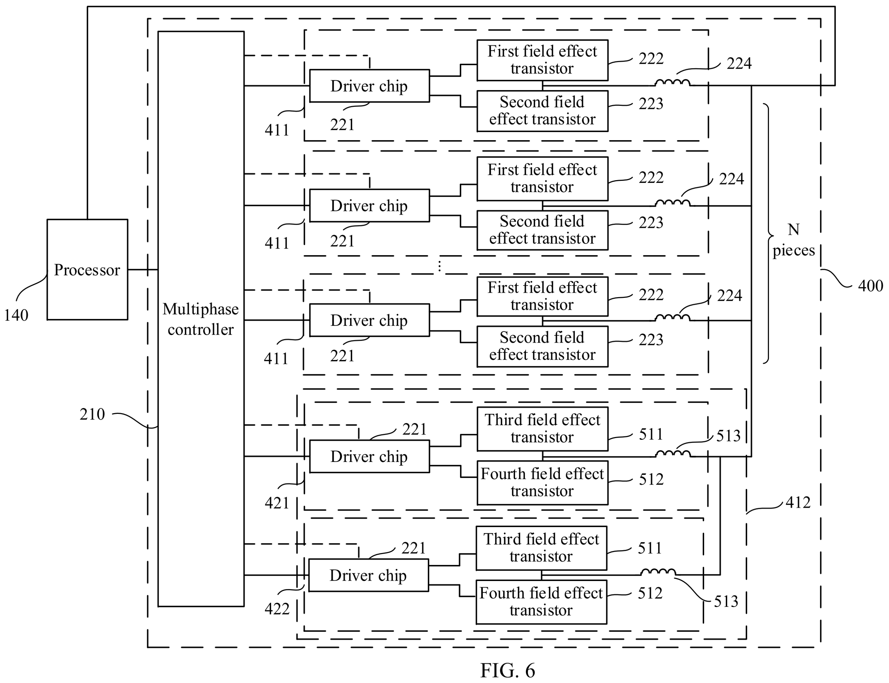

FIG. 6 is a second schematic diagram of a structure of a multiphase power source according to an embodiment of this application. With reference to FIG. 4, as shown in FIG. 6, each first power module 411 may include a driver chip 221, a first field effect transistor 222, a second field effect transistor 223, and a first inductor 224.

A control terminal of the driver chip 221 is coupled to the first output terminal of the multiphase controller 210, that is, the control terminal of the driver chip 221 in the first power module 411 is the control terminal of the first power module 411. An input terminal of the driver chip 221 is coupled to the second output terminal of the multiphase controller 210, that is, the input terminal of the driver chip 221 in the first power module 411 is the input terminal of the first power module 411. An output terminal of the driver chip 221 is coupled to a control terminal of the first field effect transistor 222 and a control terminal of the second field effect transistor 223. A first terminal of the first field effect transistor 222 is coupled to the output terminal (not shown in FIG. 6) of the voltage source, that is, the first terminal of the first field effect transistor 222 is the power supply terminal of the first power module 411. A second terminal of the first field effect transistor 222 is coupled to a first terminal of the second field effect transistor 223, and a second terminal of the second field effect transistor 223 is coupled to a ground terminal (not shown in FIG. 6). The second terminal of the first field effect transistor 222 is coupled to a first terminal of the first inductor 224, and a second terminal of the first inductor 224 is coupled to the power supply terminal of the processor 140. That is, the second terminal of the first inductor 224 is the output terminal of the first power module 411. The ground terminal is a ground terminal of the electronic device.

Specifically, when the driver chip 221 in one first power module 411 receives the first enable information, the driver chip 221 is started. After the driver chip 221 is started, a first square wave signal used to control the first field effect transistor 222 to be turned on or turned off, and a second square wave signal used to control the second field effect transistor 223 to be turned off or turned on are generated based on the second control information. At the same time, waveforms of the first square wave signal and the second square wave signal are opposite. That is, a state of the first field effect transistor 222 is opposite to that of the second field effect transistor 223. The second field effect transistor 223 is turned off when the first field effect transistor 222 is turned on, and the second field effect transistor 223 is turned on when the first field effect transistor 222 is turned off.

When the first field effect transistor 222 is turned on and the second field effect transistor 223 is turned off, the voltage source charges the first inductor 224 by using the first field effect transistor 222, and supplies power to the processor 140. Then, the first field effect transistor 222 is turned off, and the second field effect transistor 223 is turned on. The first inductor 224 starts to discharge, and continues to supply power to the processor 140. As such, the first field effect transistor 222 and the second field effect transistor 223 in each first power module 411 are repeatedly turned off and turned on alternately, thereby charging the processor 140.

S504: The second power module supplies power to the processor based on the second control information and the first enable information.

Still as shown in FIG. 4, the second power module 412 may include a first power submodule 421 and a second power submodule 422 that are connected in parallel. Because an output current of the first power submodule 421 and an output current of the second power submodule 422 are less than an output current of each second power module, a loss of the first power submodule 421 is lower than that of each first power module 411, and a loss of the second power submodule 422 is lower than that of each first power module 411. For example, the foregoing losses may be losses of a field effect transistor and an inductor in a power module.

Specifically, a control terminal of the first power submodule 421 is coupled to the first output terminal of the multiphase controller 210, an input terminal of the first power submodule 421 is coupled to the second output terminal of the multiphase controller 210, a power supply terminal of the first power submodule 421 is coupled to the output terminal (not shown in FIG. 4) of the voltage source, and an output terminal of the first power submodule 421 is coupled to the power supply terminal of the processor 140.

A control terminal of the second power submodule 422 is coupled to the first output terminal of the multiphase controller 210, an input terminal of the second power submodule 422 is coupled to the second output terminal of the multiphase controller 210, a power supply terminal of the second power submodule 422 is coupled to the output terminal (not shown in FIG. 4) of the voltage source, and an output terminal of the second power submodule 422 is coupled to the power supply terminal of the processor 140.

Generally, an output current of the first power submodule 421 is less than that of each first power module 411, and an output current of the second power submodule 422 is less than that of each first power module 411. In addition, a difference between the output current of each first power module 411 and a sum of the output current of the first power submodule 421 and the output current of the second power submodule 422 is less than a first threshold. For example, the sum of the output current of the first power submodule 421 and the output current of the second power submodule 422 is equal to the output current of each first power module 411.

In actual application, when the multiphase power source 410 is in the full-phase continuous conduction mode, an output current of each phase of the multiphase power source 410 is substantially equal. Therefore, when the multiphase power source 410 is in the full-phase continuous conduction mode, the first power submodule 421 and the second power submodule 422 in the second power module 412 supply power to the processor 140 together, so as to ensure that a sum of an output current of the first power submodule 421 and an output current of the second power submodule 422 is equal to an output current of each first power module 411.

A structure of the first power submodule 421 may be the same as or different from a structure of the second power submodule 422. In this embodiment of this application, that the structure of the first power submodule 421 is the same as that of the second power submodule 422 is used as an example for description. The following uses the first power submodule as an example to briefly describe a possible structure of each power submodule.

Still as shown in FIG. 6, the first power submodule 421 may include a driver chip 221, a third field effect transistor 511, a fourth field effect transistor 512, and a second inductor 513.

A control terminal of the driver chip 221 is coupled to the first output terminal of the multiphase controller 210, that is, the control terminal of the driver chip 221 in the first power submodule 421 is the control terminal of the first power submodule 421. An input terminal of the driver chip 221 is coupled to the second output terminal of the multiphase controller 210, that is, the input terminal of the driver chip 221 in the first power submodule 421 is the input terminal of the first power submodule 421. An output terminal of the driver chip 221 is coupled to a control terminal of the third field effect transistor 511 and a control terminal of the fourth field effect transistor 512. A first terminal of the third field effect transistor 511 is coupled to the output terminal (not shown in FIG. 6) of the voltage source, that is, the third field effect transistor 511 is the power supply terminal of the first power submodule 421. A second terminal of the third field effect transistor 511 is coupled to a first terminal of the fourth field effect transistor 512, and a second terminal of the fourth field effect transistor 512 is coupled to the ground terminal (not shown in FIG. 6). A first terminal of the second inductor 513 is coupled to the second terminal of the third field effect transistor 511, and a second terminal of the second inductor 513 is coupled to the power supply terminal of the processor 140. That is, the second inductor 513 is the output terminal of the first power submodule 421.

With reference to FIG. 6, the following uses the first power submodule 421 as an example to briefly describe a power supply principle of each power submodule.

Specifically, when the driver chip 221 in the first power submodule 421 receives the first enable information, the driver chip 221 is started. After the driver chip 221 is started, a third square wave signal used to control the third field effect transistor 511 to be turned on or turned off and a fourth square wave signal used to control the fourth field effect transistor 512 to be turned off or turned on are generated based on the second control information. At the same time, waveforms of the third square wave signal and the fourth square wave signal are opposite. That is, a state of the third field effect transistor 511 is opposite to that of the fourth field effect transistor 512. The fourth field effect transistor 512 is turned off when the third field effect transistor 511 is turned on, and the fourth field effect transistor 512 is turned on when the third field effect transistor 511 is turned off.

When the third field effect transistor 511 is turned on and the fourth field effect transistor 512 is turned off, the voltage source charges the second inductor 513 by using the third field effect transistor 511, and supplies power to the processor 140. Then, the third field effect transistor 511 is turned off, and the fourth field effect transistor 512 is turned on. The second inductor 513 starts to discharge, and continues to supply power to the processor 140. As such, the third field effect transistor 511 and the fourth field effect transistor 512 in the first power submodule are repeatedly turned off and turned on alternately, thereby charging the processor 140.

It should be noted that because a structure of the second power submodule 422 is the same as that of the first power submodule 421, a power supply principle of the second power submodule 422 is the same as that of the first power submodule 421. Therefore, for the power supply principle of the second power submodule 422, reference may be made to the foregoing description of the power supply principle of the first power submodule 421. Details are not described in this embodiment of this application again.

In addition, still as shown in FIG. 6, in one embodiment, the control terminal of each first power module 411 and the control terminal of the first power submodule 421 in the second power module 412 may be coupled together before being coupled to the first output terminal of the multiphase controller 210. FIG. 6 is shown by using an example in which the control terminal of each first power module 411 and the control terminal of the first power submodule 421 in the second power module 412 are separately coupled to the first output terminal of the multiphase controller 210.

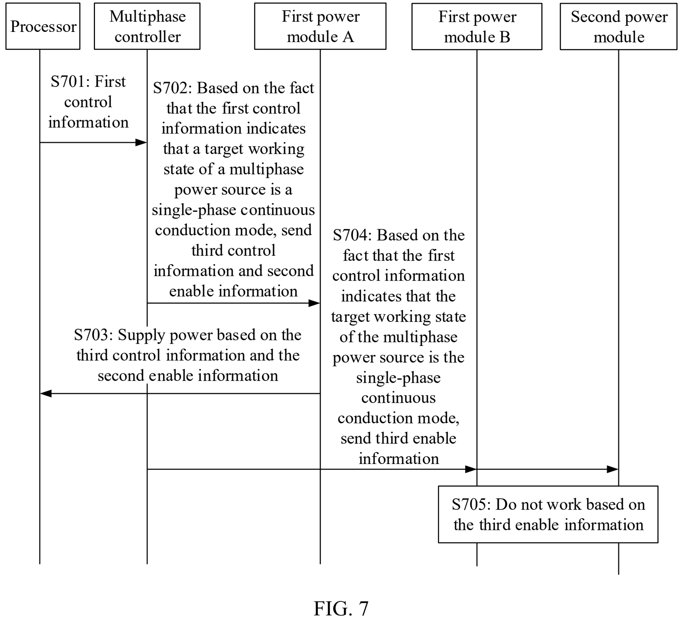

Optionally, the multiphase controller 210 may be further configured to perform another power supply method according to an embodiment of this application. As shown in FIG. 7, the power supply method may include the following steps.

S701: The multiphase controller receives first control information sent by the processor.

For specific description of the first control information, reference may be made to the description in S501.

S702: Based on the fact that the first control information indicates that the target working state of the multiphase power source is the single-phase continuous conduction mode, the multiphase controller sends third control information and second enable information to a first power module A.

The first power module A is one of the first power modules.

Reference may be further made to description of enable information in the foregoing embodiment. In this embodiment, the second enable information is used to indicate that one of the first power modules is started. It should be noted that in the single-phase continuous conduction mode, one of all phases of the multiphase power source 410 needs to output a current to supply power to the processor. Therefore, the multiphase controller may send the second enable information to one first power module.

Because both the first enable information and the second enable information are used to start a driver chip in a power module, the first enable information and the second enable information may be the same enable information. For example, the first enable information and the second enable information may be at a high level.

The third control information is used to control the first power module to supply power to the processor. The third control information may be a square wave signal with an adjustable duty cycle. For example, the third control information may be a pulse width modulation (pulse width modulation, PWM) signal. A magnitude of an output current of a corresponding power module may be adjusted by adjusting a duty cycle of the third control information.

It should be noted that because both the full-phase continuous conduction mode and the single-phase continuous conduction mode are continuous conduction modes, the third control information and the second control information may be the same control information.

S703: The first power module A supplies power to the processor based on the third control information and the second enable information.

In this embodiment, the principle by which one first power module supplies power to the processor based on the third control information and the second enable information is consistent with the principle by which each first power module supplies power to the processor based on the second control information and the first enable information as described in S503. Therefore, in S703, for a process in which the first power module supplies power to the processor based on the third control information and the second enable information, reference may be made to the description in S503. Details are not described in this embodiment of this application again.

S704: Based on the fact that the first control information indicates that the target working state of the multiphase power source is the single-phase continuous conduction mode, the multiphase controller sends third enable information to each first power module B and the second power module.

The first power module B is one of the first power modules other than the first power module A.

Reference may be further made to description of enable information in the foregoing embodiment. In this embodiment, the third enable information is used to indicate that the first power module B and the second power module stop working. That is, the third enable information is different from the second enable information. For example, when the second enable information is at a high level, the third enable information is at a low level.

In the single-phase continuous conduction mode, only one phase of the multiphase power source needs to supply power to the processor. Therefore, when it is indicated, based on the first control information, that the target working state of the multiphase power source is the single-phase continuous conduction mode, the multiphase controller further needs to send the third enable information to the first power module A and the second power module in addition to sending the second enable information to the first power module A, so that the first power module A supplies power to the processor, while the first power module B and the second power module do not need to supply power to the processor.

S705: The first power module B and the second power module do not work based on the third enable information.

That the first power module B and the second power module do not work may include: the power module switches from a working state to a non-working state, or may maintain an original non-working state. This is not limited in this embodiment of this application.

In some other embodiments, when the multiphase power source is in the single-phase continuous conduction mode, one phase of the multiphase power source needs to have an output current. Therefore, when the first control information indicates that the target working state of the multiphase power source is the single-phase continuous conduction mode, the multiphase controller may alternatively send only the third control information and the second enable information to the second power module. In addition, the multiphase controller may alternatively send the third enable information to each first power module.

Specifically, the principle by which the second power module supplies power to the processor based on the third control information and the second enable information is consistent with the principle by which the second power module supplies power to the processor based on the second control information and the first enable information as described in S504. Therefore, for a process in which the second power module supplies power to the processor based on the third control information and the second enable information, reference may be made to the description in S504. Details are not described in this embodiment of this application again.

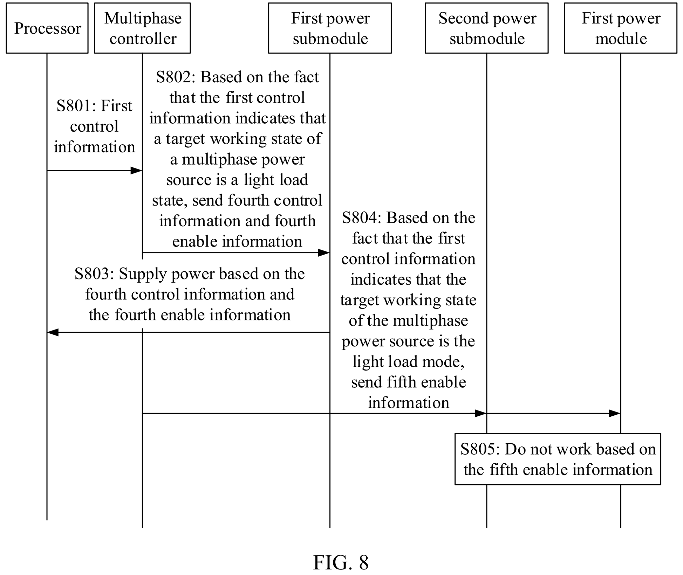

Optionally, the multiphase controller 210 may be further configured to perform another power supply method according to an embodiment of this application. As shown in FIG. 8, the power supply method may include the following steps.

S801: The multiphase controller receives first control information sent by the processor.

For specific description of the first control information, reference may be made to the description in S501.

S802: Based on the fact that the first control information indicates that the target working state of the multiphase power source is the light load state, the multiphase controller sends fourth control information and fourth enable information to the first power submodule.

Reference may be further made to description of enable information in the foregoing embodiment. In this embodiment, the fourth enable information is used to indicate that the first power submodule is started. It should be noted that in the light load state, an output current of the multiphase power source is relatively low, therefore, only one sub-phase of the multiphase power source needs to output a current to supply power to the processor. Therefore, the multiphase controller may send the fourth enable information to one first power submodule.

The fourth enable information, the first enable information and the second enable information may be the same enable information. For example, the first enable information, the second enable information, and the fourth enable information may be at a high level.

The fourth control information is used to control the first power submodule to supply power to the processor. The fourth control information may be a square wave signal with an adjustable duty cycle. For example, the fourth control information may be a pulse width modulation (pulse width modulation, PWM) signal. A magnitude of an output current of a corresponding power submodule may be adjusted by adjusting a duty cycle of the fourth control information.

It should be noted that because the light load state is a discontinuous conduction mode, that is, a current of an inductor may be 0 in one switching cycle, the fourth control information and the third control information (or the second control information) may be different control information.

A maximum output current of each power submodule is relatively low. Therefore, compared with each first power module, a field effect transistor that withstands a relatively low current may be selected for each power submodule. For example, a field effect transistor with relatively low junction capacitance, relatively low on-resistance, or relatively low switching frequency may be selected. In addition, the field effect transistor with relatively low junction capacitance, relatively low on-resistance, or relatively low switching frequency has a relatively low loss when a current is relatively low. That is, power consumption of a power submodule may be reduced by selecting the field effect transistor with relatively low junction capacitance, relatively low on-resistance, or relatively low switching frequency when the current is relatively low, thereby improving efficiency of the power submodule, and further improving efficiency of the multiphase power source in the light load state.

In addition, a maximum output current of each power submodule is relatively low, therefore, a second inductor with an inductance value greater than the first inductor may be selected for each power submodule. With reference to formula (4), it can be learned that an inductance value of the second inductor is relatively large, therefore, a ripple current of the second inductor is relatively low. With reference to formula (3), it can be learned that a ripple current of the second inductor is relatively low, therefore, a magnetic loss of the second inductor is also reduced. In this way, efficiency of a power submodule may be further improved, thereby further improving efficiency of the multiphase power source in the light load state.

In addition, the first inductor and the second inductor may be inductors in a same package, or a package of the second inductor may be smaller than that of the first inductor. In this way, a size of the inductors remains unchanged, so that a size and costs of the multiphase power source remain unchanged. Alternatively, the size of the inductors is smaller, so that the size of the multiphase power source is smaller, and the costs are lower.

S803: The first power submodule supplies power to the processor based on the fourth control information and the fourth enable information.

In this embodiment, the principle by which the first power submodule supplies power to the processor based on the fourth control information and the fourth enable information is consistent with the principle by which the first power submodule supplies power to the processor based on the second control information and the first enable information as described in S504. Therefore, in S803, for a process in which the first power submodule supplies power to the processor based on the fourth control information and the fourth enable information, reference may be made to the description in S504. Details are not described in this embodiment of this application again.

S804: Based on the fact that the first control information indicates that the target working state of the multiphase power source is the light load state, the multiphase controller sends fifth enable information to each first power module and the second power submodule.

Reference may be further made to description of enable information in the foregoing embodiment. In this embodiment, the fifth enable information is used to indicate that each first power module and the second power submodule stop working. That is, the fifth enable information is different from the fourth enable information. For example, when the fourth enable information is at a high level, the fifth enable information is at a low level.

In the single-phase discontinuous conduction mode, only one sub-phase of the multiphase power source needs to supply power to the processor. Therefore, when it is indicated, based on the first control information, that the target working state of the multiphase power source is the single-phase discontinuous conduction mode, the multiphase controller further needs to send the fifth enable information to each first power module and the second power submodule in addition to sending the fourth enable information to the first power submodule, so that the first power submodule supplies power to the processor, while each first power module and the second power submodule do not need to supply power to the processor.

S805: Each first power module and the second power submodule do not work based on the fifth enable information.

That each first power module and the second power submodule do not work may include: the power module switches from a working state to a non-working state, or may maintain an original non-working state. This is not limited in this embodiment of this application.

In some other embodiments, when the multiphase power source is in the light load state, one sub-phase of the multiphase power source has an output current. Therefore, when the first control information indicates that the target working state of the multiphase power source is the light load state, the multiphase controller may alternatively send only the fourth control information and the fourth enable information to the second power submodule. In addition, the multiphase controller may alternatively send fifth enable information to each first power module and the first power submodule.

In conclusion, because the output current of the multiphase power source is relatively low when the multiphase power source is in the light load state, the multiphase controller may control one power submodule with a relatively low loss to supply power to the processor when the multiphase power source is in the light load state. The loss of each power submodule is lower than that of each power module in the original multiphase power source. Therefore, in the light load state, one of the two power submodules has a relatively low electric energy loss when supplying power to the processor, thereby improving power supply efficiency of the power submodule, and further improving efficiency of the multiphase power source in the light load state.

In addition, an output current of the second power module including the two power submodules that are connected in parallel is substantially equal to that of each first power module. Therefore, when the multiphase power source is in the full-phase continuous conduction mode or the single-phase continuous conduction mode, the multiphase controller may simultaneously control the two power submodules to supply power to the processor, so as to satisfy a power demand of the processor. That is, the multiphase power source provided in this embodiment of this application not only has relatively high efficiency in the light load state, but also can normally supply power to the processor in another working state.

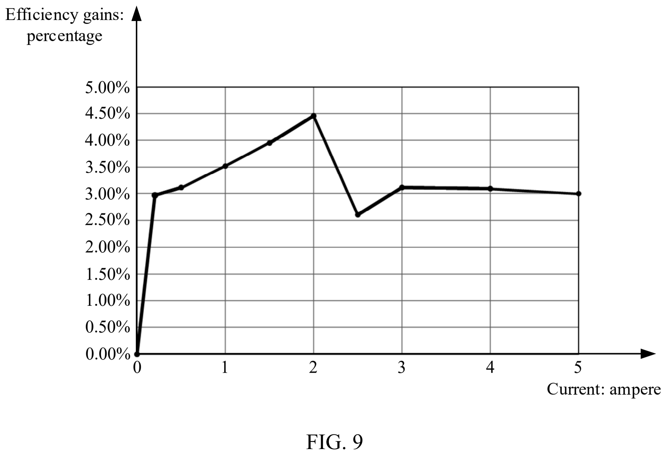

With reference to FIG. 9, that an inductance value of the second inductor is twice that of the first inductor is used as an example to describe efficiency gains of the multiphase power source provided in this embodiment of this application when working in the light load state.

It is assumed that an inductance value of an inductor is doubled. Still with reference to formula (4), it can be learned that a ripple current of an inductor is reduced by half when the inductance value of the inductor is doubled. Still with reference to formula (3), it can be learned that a magnetic loss of the inductor becomes one quarter of its original value when the ripple current of the inductor is reduced by half, that is, the magnetic loss of the inductor is reduced by three quarters.

For example, as shown in FIG. 9, efficiency of the multiphase power source in the light load state may be improved by at least 2.6% after the inductance value of the inductor increases.

Similarly, when a current flowing through a field effect transistor is reduced, a field effect transistor with lower junction capacitance may be selected to minimize a loss of the field effect transistor. For example, in the light load state (the current is lower than 5A), efficiency of the multiphase power source in the light load state may be improved by approximately 3% after the loss of the field effect transistor is reduced.

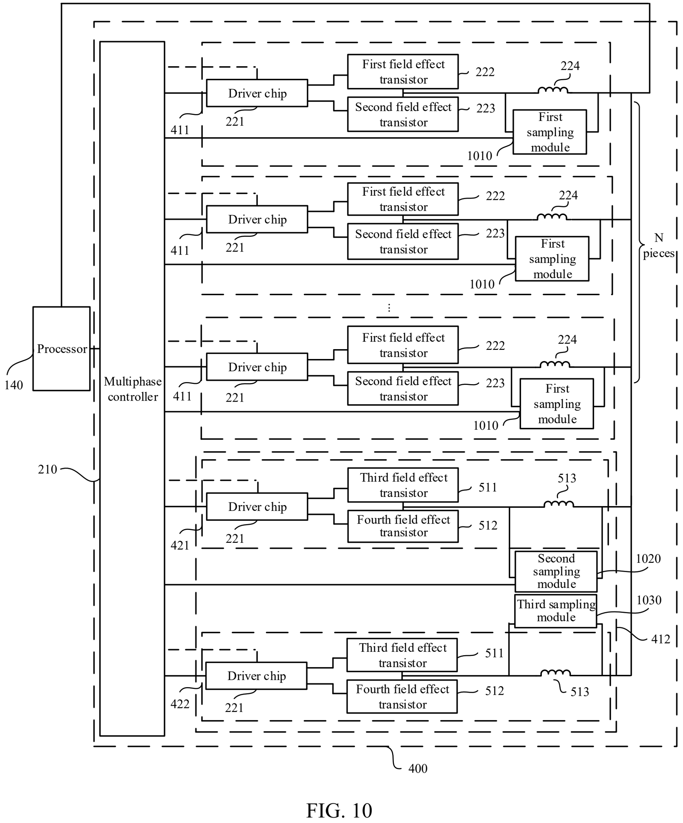

Optionally, with reference to FIG. 6, as shown in FIG. 10, each first power module 411 may further include a first sampling module 1010, and the second power module 412 may further include a second sampling module 1020 and a third sampling module 1030.

In the first power module 411, a first terminal of the first sampling module 1010 is coupled to the first terminal of the first inductor 224, a second terminal of the first sampling module 1010 is coupled to the second terminal of the first inductor 224, and an output terminal of the first sampling module 1010 is coupled to a first feedback terminal of the multiphase controller 210.

The first sampling module 1010 may collect a first sampled signal from the first inductor 224 in the first power module 411, and then send the first sampled signal from the first inductor 224 in the first power module 411 to the multiphase controller 210.

A first terminal of the second sampling module 1020 is coupled to the first terminal of the second inductor 513 in the first power submodule 421, a second terminal of the second sampling module 1020 is coupled to the second terminal of the second inductor 513 in the first power submodule 421, and an output terminal of the second sampling module 1020 is coupled to a second feedback terminal of the multiphase controller 210.

The second sampling module 1020 may collect a first sampled signal from the second inductor 513 in the first power submodule 421, and then send the first sampled signal from the second inductor 513 in the first power submodule 421 to the multiphase controller 210.

A first terminal of the third sampling module 1030 is coupled to the first terminal of the second inductor 513 in the second power submodule 422, a second terminal of the third sampling module 1030 is coupled to the second terminal of the second inductor 513 in the second power submodule 422, and an output terminal of the third sampling module 1030 is coupled to a third feedback terminal of the multiphase controller 210.

The third sampling module 1030 may collect a first sampled signal from the second inductor 513 in the second power submodule 422, and then send the first sampled signal from the second inductor 513 in the second power submodule 422 to the multiphase controller 210.

It should be noted that the first feedback terminal, the second feedback terminal, and the third feedback terminal of the multiphase controller 210 are different feedback terminals included in the multiphase controller.

Optionally, still referring to FIG. 10, a quantity of feedback terminals of the multiphase controller 210 is related to a quantity of "phases" of the multiphase power source. For example, when the multiphase power source is a power source having (N+1) phases, that is, the multiphase power source includes N first power modules 411 and one second power module 412, the multiphase controller 210 may include (N+2) feedback terminals. The (N+2) feedback terminals include N first feedback terminals, one second feedback terminal, and one third feedback terminal, and the N first feedback terminals are respectively coupled to output terminals of N first sampling modules.

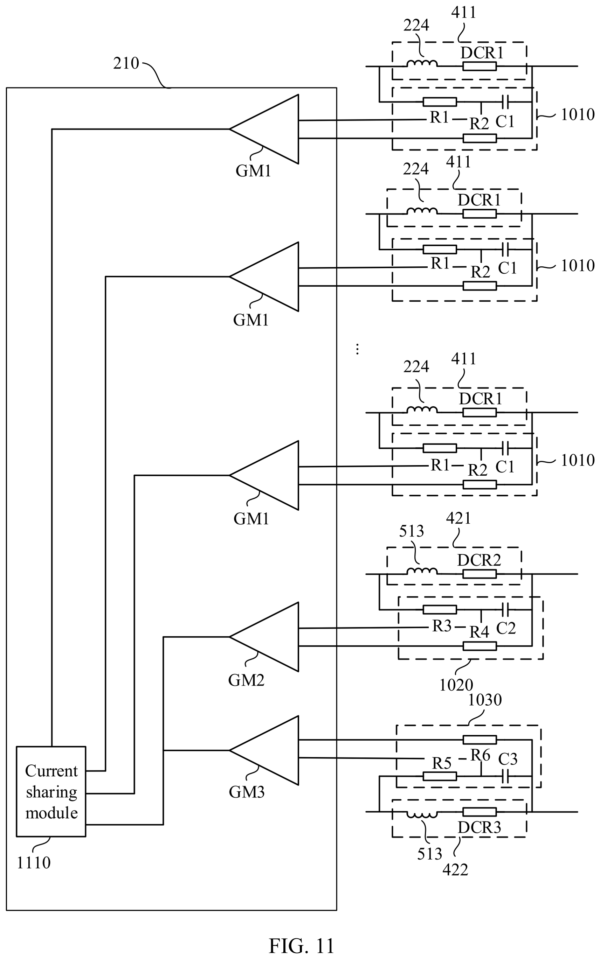

With reference to FIG. 11, the following describes possible structures of the multiphase controller, a first sampling module, and the second sampling module.

Optionally, with reference to FIG. 10, as shown in FIG. 11, each first sampling module 1010 may include a first resistor R1, a second resistor R2, and a first capacitor C1. A first terminal of the first resistor R1 is coupled to the first terminal of the first inductor 224, and a second terminal of the first resistor R1 is coupled to a first terminal of the first capacitor C1. A second terminal of the first capacitor C1 is coupled to a second terminal of a direct current resistor DCR1 of the first inductor 224 and a first terminal of the second resistor R2. The first terminal of the first capacitor C1 is further coupled to a first input terminal of a corresponding first operational transconductance amplifier GM1 in the multiphase controller 210. A second terminal of the second resistor R2 is coupled to a second input terminal of the first operational transconductance amplifier GM1. The first inductor 224 is connected in series with the direct current resistor DCR1 of the first inductor 224. The direct current resistor DCR1 is an equivalent resistor of the first inductor 224.

A time constant of the first inductor 224 and the direct current resistor DCR1 of the first inductor 224 is equal to that of the first resistor R1 and the first capacitor C1. In this way, the first capacitor C1 may collect the first sampled signal from the first inductor 224. The first operational transconductance amplifier GM1 may convert the first sampled signal from the first inductor 224 into a second sampled signal from the first inductor.

Optionally, with reference to FIG. 10, as shown in FIG. 11, the second sampling module 1020 may include, the second sampling module 1020 may include a third resistor R3, a fourth resistor R4, and a second capacitor C2. A first terminal of the third resistor R3 is coupled to the first terminal of the second inductor 513 in the first power submodule 421, and a second terminal of the third resistor R3 is coupled to a first terminal of the second capacitor C2. A second terminal of the second capacitor C2 is coupled to a second terminal of a direct current resistor DCR2 of the second inductor 513 and a first terminal of the fourth resistor R4. The first terminal of the second capacitor C2 is further coupled to a first input terminal of a second operational transconductance amplifier GM2 in the multiphase controller 210. A second terminal of the fourth resistor R4 is coupled to a second input terminal of the second operational transconductance amplifier GM2. The second inductor 513 in the first power submodule 421 is connected in series with the direct current resistor DCR2 of the second inductor 513.

A time constant of the second inductor 513 in the first power submodule 421 and the direct current resistor DCR2 of the second inductor 513 is equal to that of the third resistor R3 and the second capacitor C2. In this way, the second capacitor C2 may collect the first sampled signal from the second inductor 513. The second operational transconductance amplifier GM2 may convert the first sampled signal from the second inductor 513 of the first power submodule 421 into a second sampled signal from the second inductor 513.

Optionally, with reference to FIG. 10, as shown in FIG. 11, the third sampling module 1030 may include a fifth resistor R5, a sixth resistor R6, and a third capacitor C3. A first terminal of the fifth resistor R5 is coupled to the first terminal of the second inductor 513 of the second power submodule 422, and a second terminal of the fifth resistor R5 is coupled to a first terminal of the third capacitor C3. A second terminal of the third capacitor C3 is coupled to a second terminal of a direct current resistor DCR3 of the second inductor 513 and a first terminal of the sixth resistor R6. The first terminal of the third capacitor C3 is further coupled to a first input terminal of a third operational transconductance amplifier GM3 in the multiphase controller 210. A second terminal of the sixth resistor R6 is coupled to a second input terminal of the third operational transconductance amplifier GM3. The second inductor 513 in the second power submodule 422 is connected in series with the direct current resistor DCR3 of the second inductor 513.

A time constant of the second inductor 513 in the second power submodule 422 and the direct current resistor DCR2 of the second inductor 513 is equal to that of the fifth resistor R5 and the third capacitor C3. In this way, the third capacitor C3 may collect the first sampled signal from the second inductor 513. The third operational transconductance amplifier GM3 may convert the first sampled signal from the second inductor 513 of the second power submodule 422 into a second sampled signal from the second inductor 513.

Optionally, still as shown in FIG. 11, first sampled signals from the second power module may be sampled as a whole after an output terminal of the second operational transconductance amplifier GM2 is cascaded with an output terminal of the third operational transconductance amplifier GM3. Then, the output terminal of the second operational transconductance amplifier GM2 and the output terminal of the third operational transconductance amplifier GM3 are cascaded and coupled to a first input terminal of a current sharing module 1110, and an output terminal of each first operational transconductance amplifier GM1 is coupled to each second input terminal of the current sharing module 1110. In this way, the current sharing module 1110 may obtain a sum of second sampled signals from all phases of the multiphase power source. The multiphase controller may adjust an output current of each phase of the multiphase power source based on the sum of the second sampled signals from all phases of the multiphase power source obtained by the current sharing module 1110, so that output currents of all phases of the multiphase power source are substantially equal (that is, output currents of each first power module and the second power module are substantially equal).

It should be noted that, for how to make output currents of all phases of the multiphase power source the same, reference may be made to a specific implementation in the conventional technology. This is not limited in this embodiment of this application.

In conclusion, the multiphase power source provided in this embodiment of this application not only has relatively high efficiency in the light load state, but also can normally supply power to the processor in another working state. In addition, the multiphase power source provided in this embodiment of this application may alternatively implement current sharing control on each phase of the multiphase power source.

It should be understood that in various embodiments of this application, sequence numbers of the foregoing processes do not mean a sequence of execution. The execution sequence of the processes should be determined based on functions and internal logic of the processes, and should not constitute any limitation on an implementation process of the embodiments of this application.

A person of ordinary skill in the art may be aware that the example modules and algorithm steps described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

A person skilled in the art may clearly understand that for ease and brevity of description, for a specific operation process of the system, apparatus, and module described above, refer to a corresponding process in the foregoing method embodiments. Details are not described herein again.

In the several embodiments provided in this application, it should be understood that the disclosed system, device, and method may be implemented in another manner. For example, the described device embodiment is merely an example. For example, division of the modules is merely logical function division and there may be other division manners during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in an electrical form, a mechanical from, or another form.

The modules described as separate components may or may not be physically separate, and components displayed as modules may or may not be physical modules, may be located in one device, or may be distributed on a plurality of devices. Some or all of the modules may be selected based on an actual requirement, to achieve the objectives of the solutions in the embodiments.

In addition, functional modules in the embodiments of this application may be integrated into one device, or each of the modules may exist alone physically, or two or more modules may be integrated into one device.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

**Claims**

1.  A multiphase power source, comprising a multiphase controller, N first power modules, and a second power module, wherein the second power module comprises a first power submodule and a second power submodule that are connected in parallel, a loss of the first power submodule and a loss of the second power submodule are lower than a loss of each of the first power modules, wherein N is a positive integer;

    an input terminal of the multiphase controller is configured to be coupled to an output terminal of a processor, and a first output terminal of the multiphase controller is coupled to a control terminal of the first power submodule, a control terminal of the second power submodule, and a control terminal of each of the first power modules; and a second output terminal of the multiphase controller is coupled to an input terminal of the first power submodule, an input terminal of the second power submodule, and an input terminal of each of the first power modules;

    a power supply terminal of the first power submodule, a power supply terminal of the second power submodule, and a power supply terminal of each of the first power modules are separately configured to be coupled to an output terminal of a voltage source; and an output terminal of the first power submodule, an output terminal of the second power submodule, and an output terminal of each of the first power modules are separately coupled to a power supply terminal of the processor; and

    the multiphase controller is configured to control the first power submodule to supply power to the processor when the processor indicates that the multiphase power source is in a light load state.

2.  The multiphase power source according to claim 1, wherein each of the first power modules comprises a driver chip, a first field effect transistor, a second field effect transistor, and a first inductor;

    an input terminal of the driver chip is coupled to an output terminal of the multiphase controller, and an output terminal of the driver chip is coupled to a control terminal of the first field effect transistor and a control terminal of the second field effect transistor; a first terminal of the first field effect transistor is configured to be coupled to the voltage source, and a second terminal of the first field effect transistor is coupled to a first terminal of the second field effect transistor and a first terminal of the first inductor; and a second terminal of the first inductor is coupled to the power supply terminal of the processor.

3.  The multiphase power source according to claim 2, wherein each of the first power submodule and the second power submodule comprises a driver chip, a third field effect transistor, a fourth field effect transistor, and a second inductor;

    an input terminal of the driver chip is coupled to the output terminal of the multiphase controller, and an output terminal of the driver chip is coupled to a control terminal of the third field effect transistor and a control terminal of the fourth field effect transistor; a first terminal of the third field effect transistor is configured to be coupled to the voltage source, and a second terminal of the third field effect transistor is coupled to a first terminal of the fourth field effect transistor and a first terminal of the second inductor; and a second terminal of the second inductor is coupled to the power supply terminal of the processor, wherein a loss of the third field effect transistor is lower than that of the first field effect transistor, a loss of the fourth field effect transistor is lower than that of the second field effect transistor, and a loss of the second inductor is lower than that of the first inductor.

4.  The multiphase power source according to claim 3, wherein the third field effect transistor and the fourth field effect transistor satisfy at least one of the following conditions: low junction capacitance, low on-resistance, and low switching frequency.

5.  The multiphase power source according to claim 3 or 4, wherein an inductance value of the second inductor is greater than that of the first inductor.

6.  The multiphase power source according to any one of claims 3-5, wherein the first inductor and the second inductor are inductors in a same package.

7. The multiphase power source according to any one of claims 2-6, wherein each of the first power modules further comprises a first sampling module; a first terminal of the first sampling module is coupled to the first terminal of the first inductor, a second terminal of the first sampling module is coupled to the second terminal of the first inductor, and an output terminal of the first sampling module is coupled to a first feedback terminal of the multiphase controller.

8. The multiphase power source according to claim 7, wherein the first sampling module comprises a first resistor, a second resistor, and a first capacitor;
a first terminal of the first resistor is coupled to the first terminal of the first inductor, a second terminal of the first resistor is coupled to a first terminal of the first capacitor, and a second terminal of the first capacitor is coupled to the second terminal of the first inductor; the first terminal of the first capacitor is further coupled to a first terminal of a first operational transconductance amplifier of the multiphase controller, and the second terminal of the first capacitor is further coupled to a second terminal of the first operational transconductance amplifier by using the second resistor.

9. The multiphase power source according to any one of claims 3-8, wherein the second power module further comprises a second sampling module; a first terminal of the second sampling module is coupled to the first terminal of the second inductor in the first power submodule, a second terminal of the second sampling module is coupled to the second terminal of the second inductor in the first power submodule, and an output terminal of the second sampling module is coupled to a second feedback terminal of the multiphase controller.

10. The multiphase power source according to claim 9, wherein the second sampling module comprises a third resistor, a fourth resistor, and a second capacitor;
a first terminal of the third resistor is coupled to the first terminal of the second inductor in the first power submodule, a second terminal of the third resistor is coupled to a first terminal of the second capacitor, and a second terminal of the second capacitor is coupled to the second terminal of the second inductor in the first power submodule; the first terminal of the second capacitor is further coupled to a first terminal of a second operational transconductance amplifier of the multiphase controller, and the second terminal of the second capacitor is further coupled to a second terminal of the second operational transconductance amplifier by using the fourth resistor.

11. The multiphase power source according to claim 9 or 10, wherein the second power module further comprises a third sampling module; a first terminal of the third sampling module is coupled to the first terminal of the second inductor in the second power submodule, a second terminal of the third sampling module is coupled to the second terminal of the second inductor in the second power submodule, and an output terminal of the third sampling module is coupled to a third feedback terminal of the multiphase controller.

12. The multiphase power source according to claim 11, wherein the third sampling module comprises a fifth resistor, a sixth resistor, and a third capacitor;
a first terminal of the fifth resistor is coupled to the first terminal of the second inductor in the second power submodule, a second terminal of the fifth resistor is coupled to a first terminal of the third capacitor, and a second terminal of the third capacitor is coupled to the second terminal of the second inductor in the second power submodule; the first terminal of the third capacitor is further coupled to a first terminal of a third operational transconductance amplifier of the multiphase controller, and the second terminal of the third capacitor is further coupled to a second terminal of the third operational transconductance amplifier by using the sixth resistor.

13. A power supply method, applied to the multiphase power source according to any one of claims 1-12, wherein the power supply method comprises:
controlling the first power submodule to supply power to the processor when the processor indicates that the multiphase power source is in a light load state.

14. The power supply method according to claim 13, wherein the power supply method further comprises:
controlling each of the power submodules and each first power module to supply power to the processor when the processor indicates that the multiphase power source is in a full-phase continuous conduction mode.

15. The power supply method according to claim 13 or 14, wherein the power supply method further comprises:
controlling one of the first power modules to supply power to the processor when the processor indicates that the multiphase power source is in a single-phase continuous conduction mode.

16. The power supply method according to claim 13 or 14, wherein the power supply method further comprises:
controlling each of the power submodules to supply power to the processor when the processor indicates that the multiphase power source is in a single-phase continuous conduction mode.

17. An electronic device, comprising a voltage source, a processor, a microcontroller, and the multiphase power source according to any one of claims 1-12, wherein
an output terminal of the voltage source is coupled to a power supply terminal of the multiphase power source and a power supply terminal of the microcontroller; a control terminal of the multiphase power source is coupled to an output terminal of the processor and an output terminal of the microcontroller, and an output terminal of the multiphase power source is coupled to a power supply terminal of the processor.

FIG. 1

FIG. 2

EP 4 654 449 A1

FIG. 3

FIG. 4

| Processor | Multiphase controller | First power module | Second power module |
|---|---|---|---|

S501: First control information

S502: Based on the fact that the first control information indicates that a target working state of a multiphase power source is a full-phase continuous conduction mode, send second control information and first enable information

S503: Supply power based on the second control information and the first enable information

S504: Supply power based on the second control information and the first enable information

FIG. 5

FIG. 6

EP 4 654 449 A1

| Processor | Multiphase controller | First power module A | First power module B | Second power module |
|---|---|---|---|---|

S701: First control information

S702: Based on the fact that the first control information indicates that a target working state of a multiphase power source is a single-phase continuous conduction mode, send third control information and second enable information

S703: Supply power based on the third control information and the second enable information

S704: Based on the fact that the first control information indicates that the target working state of the multiphase power source is the single-phase continuous conduction mode, send third enable information

S705: Do not work based on the third enable information

FIG. 7

| Processor | Multiphase controller | First power submodule | Second power submodule | First power module |
|---|---|---|---|---|

S801: First control information

S802: Based on the fact that the first control information indicates that a target working state of a multiphase power source is a light load state, send fourth control information and fourth enable information

S803: Supply power based on the fourth control information and the fourth enable information

S804: Based on the fact that the first control information indicates that the target working state of the multiphase power source is the light load mode, send fifth enable information

S805: Do not work based on the fifth enable information

FIG. 8

FIG. 9

FIG. 10

FIG. 11

## INTERNATIONAL SEARCH REPORT

| | International application No. |
|---|---|
| | **PCT/CN2024/109924** |

### A. CLASSIFICATION OF SUBJECT MATTER

H02M1/00(2007.01)i; H02M1/08(2006.01)i

According to International Patent Classification (IPC) or to both national classification and IPC

### B. FIELDS SEARCHED

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 多相, 感值, 损耗, 轻载, 电感, multi+, phase, light, value, inductance, loss

### C. DOCUMENTS CONSIDERED TO BE RELEVANT

| Category* | Citation of document, with indication, where appropriate, of the relevant passages | Relevant to claim No. |
|---|---|---|
| X | CN 116436263 A (HUAWEI DIGITAL POWER TECHNOLOGIES CO., LTD.) 14 July 2023 (2023-07-14) description, paragraphs 34-81, and figures 1-8 | 1-17 |
| A | WO 2023143381 A1 (VIVO MOBILE COMMUNICATION CO., LTD.) 03 August 2023 (2023-08-03) entire document | 1-17 |
| A | CN 219351542 U (INNOVISION SEMICONDUCTOR INC.) 14 July 2023 (2023-07-14) entire document | 1-17 |
| A | CN 115459558 A (HANGZHOU EINNO SEMICONDUCTOR CO., LTD.) 09 December 2022 (2022-12-09) entire document | 1-17 |
| A | CN 116634541 A (HONOR DEVICE CO., LTD.) 22 August 2023 (2023-08-22) entire document | 1-17 |
| A | CN 115129135 A (SUZHOU INSPUR INTELLIGENT TECHNOLOGY CO., LTD.) 30 September 2022 (2022-09-30) entire document | 1-17 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 November 2024** | **08 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/109924**

| Patent document cited in search report | | | Publication date (day/month/year) | Patent family member(s) | | | Publication date (day/month/year) |
|---|---|---|---|---|---|---|---|
| CN | 116436263 | A | 14 July 2023 | None | | | |
| WO | 2023143381 | A1 | 03 August 2023 | CN | 114442402 | A | 06 May 2022 |
| CN | 219351542 | U | 14 July 2023 | None | | | |
| CN | 115459558 | A | 09 December 2022 | None | | | |
| CN | 116634541 | A | 22 August 2023 | None | | | |
| CN | 115129135 | A | 30 September 2022 | WO | 2024021448 | A1 | 01 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311305157